# EUROPÄISCHE PATENTSCHRIFT

(11) **EP 3 403 484 B1**
(45) Veröffentlichungstag und Bekanntmachung des Hinweises auf die Patenterteilung: **23.09.2020**
(21) Anmeldenummer: 18159720.4
(22) Anmeldetag: 02.03.2018
(51) Int. Cl.: A01D 41/127

(54) **MÄHDRESCHER**
COMBINE HARVESTER
MOISSONNEUSE-BATTEUSE

(30) Priorität: 16.05.2017 DE 102017110554
(43) Veröffentlichungstag der Anmeldung: 21.11.2018
(73) Patentinhaber: CLAAS Selbstfahrende Erntemaschinen GmbH, 33428 Harsewinkel (DE)
(72) Erfinder: Middelberg, René, 49080 Osnabrück (DE); Baumgarten, Joachim, 48361 Beelen (DE); Brune, Markus, 33428 Harsewinkel (DE); Heitmann, Christoph, 48231 Warendorf (DE)
(74) Vertreter: CLAAS Gruppe

(56) Entgegenhaltungen:
- EP-A1- 0 960 557
- DE-A1-102014 102 789
- US-B2- 9 179 599

## Beschreibung

Die Erfindung betrifft einen Mähdrescher mit den Merkmalen des Oberbegriffs von Anspruch 1.

Mähdrescher weisen regelmäßig verschiedene Arbeitsaggregate auf, die bei der Verarbeitung von Erntegut mit wechselnden Parametern betrieben werden können. Die Einstellung dieser Parameter wird auch als Maschinenparametereinstellung bezeichnet. Für einen optimalen Erntebetrieb empfiehlt es sich, die Maschinenparametereinstellung in Abhängigkeit von verschiedenen Randbedingungen einzustellen bzw. zu optimieren, wozu insbesondere die Art, die Menge bzw. das Volumen sowie die Beschaffenheit des Feldbestands und/oder des Ernteguts, das in einem Erntegutstrom durch den Mähdrescher geführt wird, zählt.

Aus der DE 10 2014 102 789 A1 ist es bekannt, als eine solche Randbedingung die Feuchte des Ernteguts im Erntegutstrom zu ermitteln. Um einen möglichst genauen Schätzwert für die Feuchte des Ernteguts zu erhalten, wird mit im Einzugskanal angeordneten Sensoren einerseits der Erntegutdurchsatz, das heißt die Schichthöhe, und andererseits die Erntegutfeuchte erfasst, wobei der ermittelte Wert für die Erntegutfeuchte durch den ermittelten Wert für den Erntegutdurchsatz nachkorrigiert wird. Dabei sind der Einzugskanal, die einen entsprechenden Sensor umfassende Durchsatzmessanordnung und die einen entsprechenden Sensor umfassende Feuchtigkeitsmessanordnung Bestandteil einer Einzugsanordnung des Mähdreschers. Das Dokument EP 0 960 557 A1 beschreibt ein Verfahren zur Messung von Erntegutfeuchtigkeit auf einer Erntemaschine.

Es besteht auch ein zunehmendes Interesse von Lohnunternehmern und Kunden, aber auch vom Fahrer bzw. der Bedienperson des Mähdreschers, auf einfache und schnelle Weise die Erträge zu erfahren, beispielsweise in Hinblick auf den Strohanteil bzw. Strohdurchsatz und/oder den Kornanteil bzw. Korndurchsatz.

Der Erfindung liegt das Problem zugrunde, einen Mähdrescher derart weiterzuentwickeln und zu verbessern, dass auf möglichst einfache Weise zumindest ein Wert für den Strohdurchsatz ermittelt werden kann.

Das obige Problem wird bei einem Mähdrescher mit den Merkmalen des Oberbegriffs von Anspruch 1 durch die Merkmale des kennzeichnenden Teils von Anspruch 1 gelöst.

Wesentlich für die Erfindung ist, dass mithilfe einer Steuerungsanordnung des Mähdreschers ein Schätzwert für den Strohdurchsatz, insbesondere den massebezogenen Strohdurchsatz (Masse-Strohdurchsatz) oder volumenbezogenen Strohdurchsatz (Volumen-Strohdurchsatz), ermittelt werden kann, indem einerseits der volumenbezogene Erntegutdurchsatz (Volumen-Erntegutdurchsatz), das heißt der volumenbezogene Gesamtdurchsatz aller Erntegutbestandteile, und andererseits die Erntegutfeuchte ermittelt wird. Anschließend wird durch eine von ggf. mehreren in der Steuerungsanordnung abgebildeten Vorschriften, das heißt Methodiken, unter Heranziehung des ermittelten Erntegutdurchsatzes und der ermittelten Erntegutfeuchte auf den Strohdurchsatz geschlossen. Die mindestens eine in der Steuerungsanordnung abgebildete Vorschrift bzw. Methodik zur Ermittlung des Schätzwerts für den Strohdurchsatz beinhaltet insbesondere für jedes Wertepaar umfassend einen Wert für den Erntegutdurchsatz und einen Wert für die Erntegutfeuchte einen zugeordneten Wert für den Strohdurchsatz. Bei letzterem Wert handelt es sich um einen Schätzwert, der ausreichend genau ist, um darauf basierend Maschinenparametereinstellungen vorzunehmen und/oder eine Schätzung der bisherigen und/oder der zu erwartenden Erträge vornehmen zu können.

Bei der Ausgestaltung gemäß Anspruch 2 weist der Mähdrescher eine Korndurchsatzmessanordnung auf, über die sich der Korndurchsatz, insbesondere der massebezogene Korndurchsatz (Masse-Korndurchsatz) oder volumenbezogene Korndurchsatz (Volumen-Korndurchsatz), ermitteln lässt, wodurch sich die Genauigkeit des Schätzwerts für den Strohdurchsatz erhöhen lässt.

Die Durchsatzmessanordnung zur Messung des volumenbezogenen Erntegutdurchsatzes weist insbesondere einen Schichthöhensensor im Bereich der Einzugsanordnung auf, über den sich die Schichthöhe des einlaufenden Ernteguts erfassen lässt und die den Erntegutdurchsatz in der Einzugsanordnung repräsentiert (Anspruch 3).

Die jeweilige Vorschrift zur Ermittlung des Strohdurchsatzes, die in der Steuerungsanordnung abgebildet ist, ist insbesondere abhängig von der Fruchtart des Ernteguts (Anspruch 4). So ist es beispielsweise denkbar, dass jeweils eine eigene Vorschrift zur Ermittlung des Strohdurchsatzes aus dem Erntegutdurchsatz und der Erntegutfeuchte für die Fruchtarten "Weizen", "Roggen", "Hafer", "Raps" etc. in der Steuerungsanordnung abgebildet ist. Diese Vorschriften sind dann, insbesondere automatisch und/oder durch die Bedienperson, in Abhängigkeit von der abzuerntenden Fruchtart auswählbar.

Die in der Steuerungsanordnung abgebildete jeweilige Vorschrift ist insbesondere in Form eines Kennfeldes hinterlegt, das den Zusammenhang zwischen den Variablen "Erntegutdurchsatz", "Erntegutfeuchte" und "Strohdurchsatz" repräsentiert (Anspruch 5).

In dem Fall, dass mehrere unterschiedliche Vorschriften abgebildet sind, sind diese jeweils als Kennfeld in der Steuerungsanordnung hinterlegt (Anspruch 6).

Anspruch 7 definiert bevorzugte von dem jeweiligen Kennfeld vorgegebene Zusammenhänge, nämlich wonach bei einem Anstieg des Erntegutdurchsatzes bzw. der Schichthöhe bei ansonsten gleichbleibender Erntegutfeuchte der Strohdurchsatz ansteigt, und/oder, wonach bei einem Anstieg der Erntegutfeuchte bei ansonsten gleichbleibendem Erntegutdurchsatz bzw. gleichbleibender Schichthöhe der Strohdurchsatz ansteigt.

Im Folgenden wird die Erfindung anhand einer lediglich ein Ausführungsbeispiel darstellenden Zeichnung näher erläutert. In der Zeichnung zeigt
- Fig. 1: eine Seitenansicht eines vorschlagsgemäßen Mähdreschers,
- Fig. 2: eine schematische Darstellung einer Steuerungsanordnung des vorschlagsgemäßen Mähdreschers und
- Fig. 3: ein Kennfeld mit der Ausgangsgröße "Strohdurchsatz" und mit den Eingangsgrößen "Erntegutdurchsatz" und "Erntegutfeuchte".

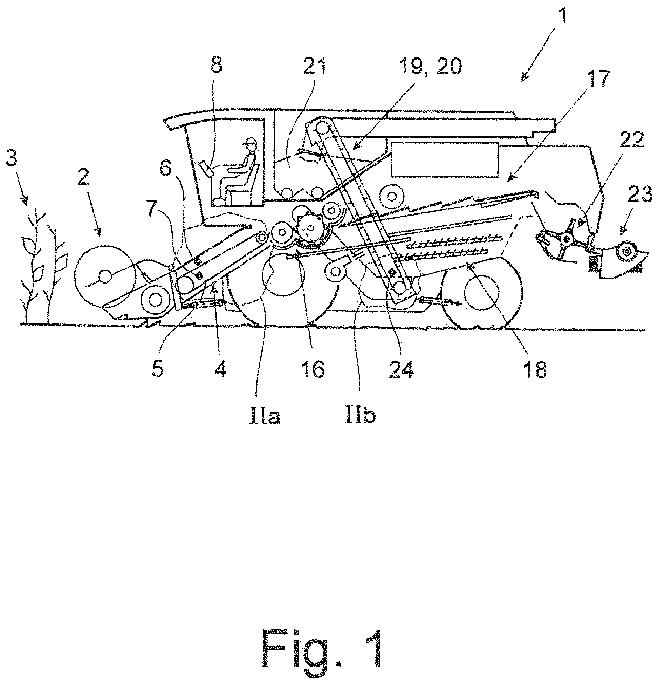

Ein vorschlagsgemäßer Mähdrescher 1 weist ein als Erntevorsatz ausgebildetes Schneidwerk 2 zum Schneiden und Aufnehmen von Erntegut auf. Das Schneidwerk 2 ist vorzugsweise austauschbar gegen ein anderes Schneidwerk 2, so dass der Mähdrescher 1 auf das Ernten unterschiedlicher Fruchtarten wie Weizen, Roggen, Hafer, Raps etc. angepasst werden kann. Unter dem Erntegut ist dabei das gesamte, vom Feldbestand 3 aufgenommene Material zu verstehen. Wie in Fig. 1 zu erkennen ist, wird ein Feldbestand 3 durch das Schneidwerk 2 gemäht und das somit gewonnene Erntegut, das unter anderem einen Kornanteil und einen Strohanteil umfasst, einer Einzugsanordnung 4 mit einem Schrägförderer 5 zugeführt.

Der vorschlagsgemäße Mähdrescher 1 weist im Bereich der Einzugsanordnung 4 eine Durchsatzmessanordnung 6, hier und vorzugsweise mit einem Schichthöhensensor, zur Messung eines volumenbezogenen Erntegutdurchsatzes, der beispielsweise in m³/min definiert ist, sowie eine separate Feuchtigkeitsmessanordnung 7 zur Messung der Erntegutfeuchte in diesem Bereich auf.

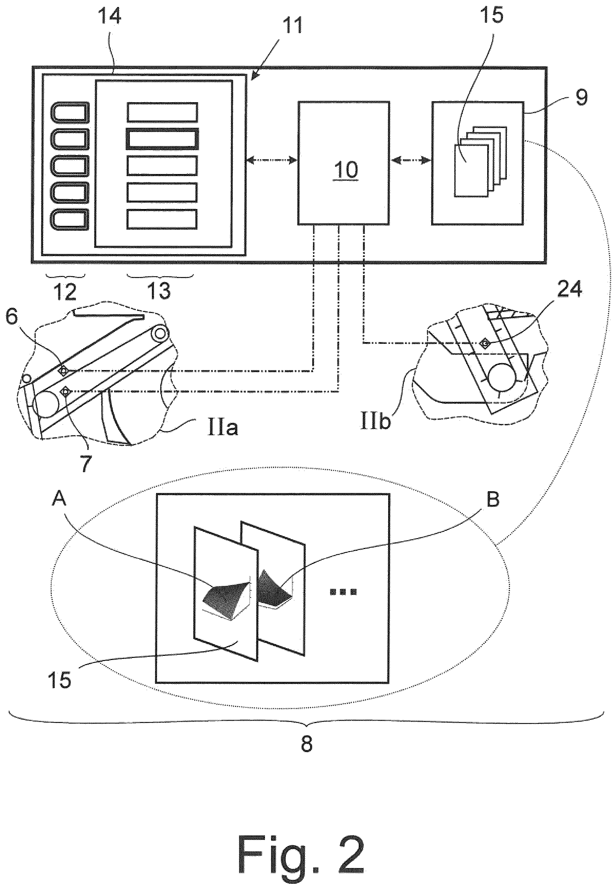

Wie insbesondere Fig. 2 zeigt, weist der vorschlagsgemäße Mähdrescher 1 außerdem eine Steuerungsanordnung 8 auf, die einen Speicher 9 zum Hinterlegen von Daten, also einen Speicher im informationstechnischen Sinne, und eine Rechenvorrichtung 10 zur Verarbeitung der in dem Speicher 9 hinterlegten Daten umfasst. Grundsätzlich ist die Steuerungsanordnung 5 dazu eingerichtet, eine Bedienperson bei der Bedienung des Mähdreschers 1 zu unterstützen. Dazu umfasst die Steuerungsanordnung 8 hier und vorzugsweise eine Ein-/Ausgabeanordnung 11 mit einem oder mehreren Eingabeelementen 12 und/oder einem oder mehreren Ausgabe- bzw. Anzeigeelementen 13. Einzelne oder alle Eingabeelemente 12 und/oder Ausgabeelemente 13 können als virtuelle Bedienelemente 12, 13 ausgebildet sein, die auf einem Touchscreen 14 angezeigt werden.

Wesentlich ist nun, dass in der Steuerungsanordnung 8 mindestens eine Vorschrift bzw. Methodik 15 zur Ermittlung eines Schätzwerts für den Strohdurchsatz, hier für den Masse-Strohdurchsatz, aus dem Volumen-Erntegutdurchsatz und der Erntegutfeuchte abgebildet ist. Wie in Fig. 2 beispielhaft dargestellt, kann auch eine Mehrzahl von unterschiedlichen Vorschriften 15 in der Steuerungsanordnung 8 abgebildet sein. Die Steuerungsanordnung 8 ermittelt dann unter Zugrundelegung einer bestimmten der Vorschriften 15 und basierend auf einem Erntegutdurchsatz, das heißt einem entsprechenden Wert für den Erntegutdurchsatz, und einer Erntegutfeuchte, das heißt einem entsprechenden Wert für die Erntegutfeuchte, den Schätzwert für den Strohdurchsatz. Mit anderen Worten wird also über die vorschlagsgemäß vorgesehene Steuerungsanordnung 8 ermöglicht, auf Basis eines ermittelten Volumen-Erntegutdurchsatzes und einer ermittelten Erntegutfeuchte auf einen Masse-Strohdurchsatz zu schließen.

Das von der Einzugsanordnung 4 aufgenommene Erntegut besteht aus Körnern und Nichtkornbestandteilen, wobei die Gesamtheit aus Körnern und Nichtkornbestandteilen den Erntegutdurchsatz bestimmt. Mit anderen Worten ist der Erntegutdurchsatz aufgeteilt zumindest in einen Korndurchsatz und in einen Strohdurchsatz. Dabei muss vorschlagsgemäß der Strohdurchsatz, insbesondere massebezogene Strohdurchsatz, nicht selbst gemessen werden, sondern über den bekannten Wert des volumenbezogenen Erntegutdurchsatzes im Bereich der Einzugsanordnung 4 und den bekannten Wert der Erntegutfeuchte im Bereich der Einzugsanordnung 4 kann über die jeweilige Vorschrift 15 ein Schätzwert für den Strohdurchsatz ermittelt werden, der es erlaubt, davon abhängig Maschinenparametereinstellungen vorzunehmen und dadurch den Ernteprozess zu optimieren. Zusätzlich oder alternativ lassen sich durch den jeweiligen Schätzwert auch die Ernteerträge, zumindest näherungsweise, bestimmen.

Es darf darauf hingewiesen werden, dass die Steuerungsanordnung 8 grundsätzlich zentral ausgestaltet sein kann. Sie dient insoweit der Ansteuerung nicht nur des Schneidwerks 2, sondern auch nachgelagerter Arbeitsaggregate des Mähdreschers 1, von denen einige im Weiteren noch beispielhaft beschrieben werden. Grundsätzlich ist es aber auch denkbar, dass die Steuerungsanordnung 8 dezentral strukturiert ist und aus einer Anzahl einzelner Steuersysteme zusammengesetzt ist. Dann kann beispielsweise vorgesehen sein, dass zumindest ein Teil der Arbeitsaggregate des Mähdreschers 1 jeweils ein zugeordnetes, dezentrales Steuersystem aufweist.

Gemäß dem Ausführungsbeispiel in Fig. 1 ist dem Schneidwerk 2 ein Dreschwerk 16 zum Dreschen von aufgenommenen Erntegut zu Korngut nachgeschaltet. Das Dreschwerk 16 ist in an sich üblicher Weise mit einer Dreschtrommel ausgestattet, die mit einem Dreschkorb zusammenwirkt. Dem Dreschwerk 16 ist eine Abscheideanordnung 17 prozesstechnisch nachgelagert. Der dem Dreschwerk 16 zugeführte Erntegutstrom wird also im Anschluss, ohne dass bereits hier gewonnene Korngut, der Abscheideanordnung 17 zugeführt. In der Abscheideanordnung 17 wird das Erntegut mit dem in ihm verbliebenen Kornanteil so bewegt, insbesondere so geschüttelt, dass auch das verbliebene Korngut möglichst aus dem Stroh und dem sonstigen Erntegut herausgetrennt wird. Das im Dreschwerk 16 und der Abscheideanordnung 17 gewonnene Korngut wird dann einer Reinigungsanordnung 18 zugeführt. In der Reinigungsanordnung 18, welche regelmäßig mehrstufig ist, werden dann noch bis hierher im Korngut mitgeführte Nichtkornbestandteile, zum Beispiel Spreu und Strohteile, sowie unausgedroschenes Material, wie etwa Ähren, Spitzen oder Grannen, von dem Korngut getrennt. Anschließend gelangt das gereinigte Korngut über eine Transportanordnung 19, hier und vorzugsweise einen Kornelevator 20, in einen Korntank 21. Das ausgedroschene Stroh, also das verbliebene Erntegut in der Abscheideanordnung 17, wird in einer Häckselanordnung 22 zerkleinert und anschließend mittels einer Verteilanordnung 23 in Fahrtrichtung hinter dem Mähdrescher 1 abgelegt, beispielsweise als Schwad entlang der Fahrspur. Das Schneidwerk 2, die Einzugsanordnung 4, das Dreschwerk 16, die Abscheideanordnung 17, die Reinigungsanordnung 18, die Transportanordnung 19 bzw. der Kornelevator 20, die Häckselanordnung 22 und die Verteilanordnung 23 bilden jeweils eines der Arbeitsaggregate des Mähdreschers 1.

Der Mähdrescher 1 verfügt hier und vorzugsweise außerdem über eine Korndurchsatzmessanordnung 24 zur Messung des Korndurchsatzes, die hier beispielsweise im Bereich des unteren Endes des Kornelevators 20 vorgesehen ist. Ein auf diese Weise ermittelter Korndurchsatz, das heißt Wert für den Korndurchsatz, kann dazu verwendet werden, die Genauigkeit des Schätzwertes für den Strohdurchsatz zu erhöhen. Der in Rede stehende Korndurchsatz und Strohdurchsatz ist hier und vorzugsweise massebezogen, wird also beispielsweise in kg/s oder t/h definiert. So wird in diesem Fall, wie Fig. 2 zeigt, der Rechenvorrichtung 10 nicht nur das jeweilige Messergebnis der Durchsatzmessanordnung 6 und der Feuchtigkeitsmessanordnung 7 (Detail IIa aus Fig. 1), sondern optional auch das Messergebnis der Korndurchsatzmessanordnung 24 (Detail IIb aus Fig. 1) zugeführt. Die Steuerungsanordnung 8, insbesondere ihre Rechenvorrichtung 10, subtrahiert dann von dem Schätzwert für den Strohdurchsatz, der basierend auf dem Erntegutdurchsatz und der Erntegutfeuchte ermittelt worden ist, den Korndurchsatz und legt das Ergebnis als neuen Schätzwert für den Strohdurchsatz fest. Der neue Schätzwert weist damit eine höhere Genauigkeit als der ursprüngliche Schätzwert für den Strohdurchsatz auf.

Wie bereits zuvor angedeutet wurde, können in der Steuerungsanordnung 8 bzw. ihrem Speicher 9 auch mehrere unterschiedliche Vorschriften 15 zur Ermittlung des Strohdurchsatzes aus dem Erntegutdurchsatz und der Erntegutfeuchte abgebildet bzw. abgelegt sein. Hier und vorzugsweise ist verschiedenen Fruchtarten des Ernteguts jeweils eine eigene solche Vorschrift 15 zugeordnet und im Speicher 9 abgelegt. Die Bedienperson hat dann die Möglichkeit, über die Ein-/Ausgabeanordnung 11 bzw. den Touchscreen 14 für den konkreten Erntevorgang die jeweils abzuerntende Fruchtart auszuwählen, woraufhin die Steuerungsanordnung 8 automatisch die der gewählten Fruchtart entsprechende Vorschrift 15 für die Ermittlung des Schätzwerts des Strohdurchsatzes zugrunde legt.

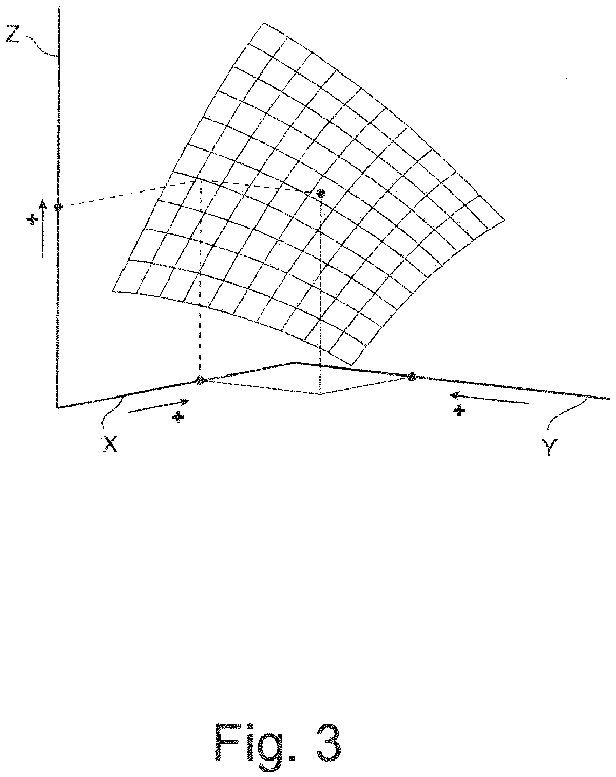

Im unteren Bereich von Fig. 2 ist dargestellt, dass jede in der Steuerungsanordnung 8 abgebildete Vorschrift 15 hier und vorzugsweise in Form eines Kennfelds A, B hinterlegt ist. Jedes Kennfeld A, B, das jeweils einer abzuerntenden Fruchtart zugeordnet ist, definiert bzw. repräsentiert den Zusammenhang zwischen den Variablen "Erntegutdurchsatz", "Erntegutfeuchte" und "Strohdurchsatz", was anhand eines beispielhaften Kennfeldes in Fig. 3 dargestellt ist.

In dem beispielhaften Kennfeld in Fig. 3 repräsentiert die X-Achse den Volumen-Erntegutdurchsatz bzw. die Schichthöhe des Ernteguts im Bereich der Einzugsanordnung 4 des Mähdreschers 1. Die Y-Achse repräsentiert die Erntegutfeuchte des Ernteguts im Bereich der Einzugsanordnung 4, die maßgeblich von der Strohfeuchte bestimmt wird. Über das dreidimensionale Kennfeld ist jedem Wertepaar aus einem Wert für den Volumen-Erntegutdurchsatz und einem Wert für die Erntegutfeuchte hier und vorzugsweise ein Schätzwert für den Masse-Strohdurchsatz zugeordnet, der hier von der Z-Achse repräsentiert wird. Dabei kann das Kennfeld beispielsweise so definiert sein, dass bei einem Anstieg des Erntegutdurchsatzes bzw. der Schichthöhe bei ansonsten gleichbleibender Erntegutfeuchte der Strohdurchsatz ansteigt. Auch ist es denkbar, dass bei einem Anstieg der Erntegutfeuchte bei ansonsten gleichbleibendem Erntegutdurchsatz bzw. gleichbleibender Schichthöhe der Strohdurchsatz ansteigt.

### Bezugszeichenliste

- 1: Mähdrescher
- 2: Schneidwerk
- 3: Feldbestand
- 4: Einzugsanordnung
- 5: Schrägförderer
- 6: Durchsatzmessanordnung
- 7: Feuchtigkeitsmessanordnung
- 8: Steuerungsanordnung
- 9: Speicher
- 10: Rechenvorrichtung
- 11: Ein-/Ausgabeanordnung
- 12: Eingabeelemente
- 13: Ausgabeelemente
- 14: Touchscreen
- 15: Vorschriften
- 16: Dreschwerk
- 17: Abscheideanordnung
- 18: Reinigungsanordnung
- 19: Transportanordnung
- 20: Kornelevator
- 21: Korntank
- 22: Häckselanordnung
- 23: Verteilanordnung
- 24: Korndurchsatzmessanordnung
- A, B: Kennfelder
- X, Y, Z: Koordinatenachsen Kennfeld

## Patentansprüche

1. Mähdrescher mit einer Einzugsanordnung (4) zum Aufnehmen von Erntegut aus Körnern und Nichtkornbestanteilen und mit Arbeitsaggregaten zur Aufteilung des Erntegutdurchsatzes zumindest in einen Volumen-Korndurchsatz und in einen Volumen-Strohdurchsatz, wobei der Mähdrescher (1) eine Durchsatzmessanordnung (6) zur Messung des Volumen-Erntegutdurchsatzes aufweist, wobei der Mähdrescher (1) eine Feuchtigkeitsmessanordnung (7) zur Messung der Erntegutfeuchte aufweist,
**dadurch gekennzeichnet,**
**dass** der Mähdrescher (1) eine Steuerungsanordnung (8) aufweist, in der mindestens eine Vorschrift (15) zur Ermittlung eines Schätzwerts für den Strohdurchsatz aus dem Erntegutdurchsatz und der Erntegutfeuchte abgebildet ist, und dass die Steuerungsanordnung (8) dazu eingerichtet ist basierend auf dieser Vorschrift (15), dem Erntegutdurchsatz und der Erntegutfeuchte den Schätzwert für den Strohdurchsatz zu ermitteln.

2. Mähdrescher nach Anspruch 1, **dadurch gekennzeichnet, dass** eine Korndurchsatzmessanordnung (24) zur Messung des Korndurchsatzes vorgesehen ist und dass die Steuerungsanordnung (8) von dem Schätzwert für den Strohdurchsatz den Korndurchsatz subtrahiert und das Ergebnis als neuen Schätzwert für den Strohdurchsatz festlegt.

3. Mähdrescher nach Anspruch 1 oder 2, **dadurch gekennzeichnet, dass** im Bereich der Einzugsanordnung (4) ein Schichthöhensensor zur Ermittlung der Schichthöhe des einlaufenden Ernteguts vorgesehen ist und dass der Erntegutdurchsatz durch die Schichthöhe in der Einzugsanordnung (4) repräsentiert wird.

4. Mähdrescher nach einem der vorhergehenden Ansprüche, **dadurch gekennzeichnet, dass** die mindestens eine Vorschrift (15) zur Ermittlung des Strohdurchsatzes aus dem Erntegutdurchsatz und der Erntegutfeuchte von der Fruchtart des Ernteguts abhängt und dass in der Steuerungsanordnung (8) unterschiedliche Vorschriften (15) zur Ermittlung des Strohdurchsatzes aus dem Erntegutdurchsatz und der Erntegutfeuchte abgebildet sind, die in Abhängigkeit von der abzuerntenden Fruchtart auswählbar sind.

5. Mähdrescher nach einem der vorhergehenden Ansprüche, **dadurch gekennzeichnet, dass** die jeweilige in der Steuerungsanordnung (8) abgebildete Vorschrift (15) als Kennfeld (A, B) in der Steuerungsanordnung (8) hinterlegt ist, das den Zusammenhang zwischen den Variablen "Erntegutdurchsatz", "Erntegutfeuchte" und "Strohdurchsatz" repräsentiert.

6. Mähdrescher nach einem der vorhergehenden Ansprüche, **dadurch gekennzeichnet, dass** die unterschiedlichen Vorschriften (15) jeweils als Kennfeld (A, B) in der Steuerungsanordnung (8) abgelegt sind.

7. Mähdrescher nach einem der vorhergehenden Ansprüche, **dadurch gekennzeichnet, dass** bei einem Anstieg des Erntegutdurchsatzes bzw. der Schichthöhe bei ansonsten gleichbleibender Erntegutfeuchte der Strohdurchsatz ansteigt, und/oder, dass bei einem Anstieg der Erntegutfeuchte bei ansonsten gleichbleibendem Erntegutdurchsatz bzw. gleichbleibender Schichthöhe der Strohdurchsatz ansteigt.

## Claims

1. A combine harvester comprising an intake arrangement (4) for picking up crop material consisting of grains and non-grain constituents and working assemblies for dividing the crop material throughput at least into a volume grain throughput and into a volume straw throughput, wherein the combine harvester (1) has a throughput measuring arrangement (6) for measuring the volume crop material throughput, wherein the combine harvester (1) has a moisture measuring arrangement (7) for measuring the crop material moisture, **characterised in that** the combine harvester (1) has a control arrangement (8) in which at least one provision (15) for ascertaining an estimated value for the straw throughput from the crop material throughput and the crop material moisture is mapped and that the control arrangement (8) is adapted to ascertain the estimated value for the straw throughput based on said provision (15), the crop material throughput and the crop material moisture.

2. A combine harvester according to claim 1 **characterised in that** a grain throughput measuring arrangement (24) is provided for measuring the grain throughput and the control arrangement (8) subtracts the grain throughput from the estimated value for the straw throughput and establishes the result as a new estimated value for the straw throughput.

3. A combine harvester according to claim 1 or 2 **characterised in that** a layer height sensor for ascertaining the layer height of the incoming crop material is provided in the area of the intake arrangement (4) and the crop material throughput is represented by the layer height in the intake arrangement (4).

4. A combine harvester according to one of the preceding claims **characterised in that** the at least one provision (15) for ascertaining the straw throughput from the crop material throughput and the crop material moisture depends on the type of crop and mapped in the control arrangement (8) are different provisions (15) for ascertaining the straw throughput from the crop material throughput and the crop material moisture, which can be selected depending on the type of crop to be harvested.

5. A combine harvester according to one of the preceding claims **characterised in that** the respective provision (15) mapped in the control arrangement (8) is stored in the control arrangement (8) as a map (A, B), which represents the relationship between the variables "crop material throughput", "crop material moisture" and "straw throughput".

6. A combine harvester according to one of the preceding claims **characterised in that** the different provisions (15) are each stored as a map (A, B) in the control arrangement (8).

7. A combine harvester according to one of the preceding claims **characterised in that** upon an increase in the crop material throughput or the layer height with the crop material moisture otherwise remaining the same the straw throughput increases and/or upon an increase in the crop material moisture with the crop material throughput otherwise remaining the same or with the layer height remaining the same the straw throughput increases.

## Revendications

1. Moissonneuse-batteuse comprenant un agencement d'alimentation (4) pour ramasser du produit récolté composé de grains et de composants non-grains et comprenant des organes de travail pour séparer le débit de produit récolté au moins en un débit volumique de grain et en un débit volumique de paille, la moissonneuse-batteuse (1) comportant un agencement de mesure de débit (6) pour mesurer le débit volumique de produit récolté, la moissonneuse-batteuse (1) comportant un agencement de mesure d'humidité (7) pour mesurer l'humidité du produit récolté, **caractérisée en ce que** la moissonneuse-batteuse (1) comporte un agencement de commande (8) dans lequel est représentée au moins une prescription (15) pour déterminer une valeur estimée pour le débit de paille à partir du débit de produit récolté et de l'humidité de produit récolté, et **en ce que** l'agencement de commande (8) est agencé pour déterminer la valeur estimée pour le débit de paille sur la base de cette prescription (15), du débit de produit récolté et de l'humidité de produit récolté.

2. Moissonneuse-batteuse selon la revendication 1, **caractérisée en ce qu'**un agencement de mesure de grain (24) est prévu pour mesurer le débit de grain, et **en ce que** l'agencement de commande (8) soustrait de la valeur estimée pour le débit de paille le débit de grain et établit le résultat comme nouvelle valeur estimée pour le débit de paille.

3. Moissonneuse-batteuse selon la revendication 1 ou 2, **caractérisée en ce que**, dans la zone de l'agencement d'alimentation (4), est prévu un capteur de hauteur de couche pour déterminer la hauteur de couche du produit récolté entrant, et **en ce que** le débit de produit récolté est représenté par la hauteur de couche dans l'agencement d'alimentation (4).

4. Moissonneuse-batteuse selon une des revendications précédentes, **caractérisée en ce que** la au moins une prescription (15) pour déterminer le débit de paille à partir du débit de produit récolté et de l'humidité de produit récolté dépend du type de culture du produit récolté, et **en ce que**, dans l'agencement de commande (8) sont représentées différentes prescriptions (15) pour déterminer le débit de paille à partir du débit de produit récolté et de l'humidité de produit récolté, lesquelles sont sélectionnables en fonction du type de culture à récolter.

5. Moissonneuse-batteuse selon une des revendications précédentes, **caractérisée en ce que** la prescription respective (15) représentée dans l'agencement de commande (8) est enregistrée dans l'agencement de commande (8) comme diagramme caractéristique (A, B), lequel représente la relation entre les variables « débit de produit récolté », « humidité de produit récolté » et « débit de paille ».

6. Moissonneuse-batteuse selon une des revendications précédentes, **caractérisée en ce que** les différentes prescriptions (15) sont mémorisées respectivement dans l'agencement de commande (8) comme diagramme caractéristique (A, B).

7. Moissonneuse-batteuse selon une des revendications précédentes, **caractérisée en ce qu'**en cas d'augmentation du débit de produit récolté, respectivement de la hauteur de couche en présence d'une humidité de produit récolté par ailleurs constante, le débit de paille augmente, et/ou **en ce qu'**en cas d'augmentation de l'humidité de produit récolté en présence d'un débit de produit récolté par ailleurs constant, respectivement d'une hauteur de couche par ailleurs constante, le débit de paille augmente.
